# EUROPÄISCHE PATENTANMELDUNG

(11) **EP 1 936 342 A1**
(43) Veröffentlichungstag der Anmeldung: **25.06.2008**
(21) Anmeldenummer: 07122485.1
(22) Anmeldetag: 06.12.2007
(51) Int. Cl.: G01K 1/14, G01K 1/16

(54) **Sensoranordnung zur Temperaturmessung**

(30) Priorität: 22.12.2006 DE 102006062115
(71) Anmelder: Sitronic Ges. Für Elektrotechnische Ausrüstung Mbh & Co. Kg, 71116 Gärtringen (DE)
(72) Erfinder: Mau, Gert, 71134, Aidlingen (DE)
(74) Vertreter: Kohler Schmid Möbus

(57) **Zusammenfassung**

Sensoranordnung (1) zur Temperaturmessung einer Oberfläche insbesondere einer Scheibe (2) umfasst einen auf einem Schaltungsträger (4) angebrachten Temperatursensor (3), der im Bereich einer Stirnseite (4') des Schaltungsträgers (4) in der Nähe zu der zu messenden Oberfläche positioniert ist, und einen weiteren Schaltungsträger (6). Die Schaltungsträger (4) und (6) sind mithilfe von mindestens zwei Verbindungselementen (5), wovon mindestens eines federnd ausgeführt ist, verbunden.

## Beschreibung

Die Erfindung betrifft eine Sensoranordnung zur Messung der Temperatur einer Oberfläche.

Derartige Sensoranordnungen, vorzugsweise zur Temperaturmessung von näherungsweise planen Oberflächen, sind verschiedentlich bekannt.

Aus der DE 699 07 493 T2 ist ein Oberflächentemperaturfühler bekannt, bei dem ein Wärme leitendes Oberflächenkontaktteil mit Hilfe einer Feder gegen die zu messende Oberfläche gedrückt wird. Das Oberflächenkontaktteil enthält einen elektrisch isoliert angebrachten Temperatursensor.

Aus der DE 102 27 454 A1 ist ein Anlegetemperaturfühler bekannt, bei dem ein Anlegeteil mit Hilfe einer Wärmeleitfolie und Wärmeleitpaste thermisch leitend an die zu messende Oberfläche angebunden ist. An das Anlegteil ist mit Hilfe einer weiteren Wärmeleitfolie ein Temperatursensor angekoppelt.

Aus DE 10 2005 016 896 ist es bekannt, bei einer Sensoranordnung zur Temperaturmessung einer Oberfläche mit einem auf einem Schaltungsträger angebrachten Temperatursensor, der an einer Stirnseite des Schaltungsträgers in unmittelbarer Nähe zu der Oberfläche positioniert ist, zwischen der Oberfläche und dem Schaltungsträger ein flexibles Wärmeleitelement anzubringen.

Der Erfindung liegt die Aufgabe zugrunde, eine kostengünstige Sensoranordnung zu schaffen, mit der die Temperatur einer näherungsweise ebenen Oberfläche, insbesondere einer Scheibe, erfasst werden kann.

Diese Aufgabe wird erfindungsgemäß durch die Sensoranordnung des Anspruchs 1 gelöst. Die abhängigen Ansprüche stellen bevorzugte Ausführungsformen der Erfindung dar.

Die erfindungsgemäße Sensoranordnung zur Temperaturmessung einer Oberfläche weist einen Schaltungsträger, auf dem ein mindestens ein Temperatursensor montiert ist, und einen weiteren Schaltungsträger, auf dem eine elektrische oder elektronische Schaltung bestückt ist, und mindestens zwei Verbindungselemente zwischen den Schaltungsträgern auf. Es ist mindestens eines der Verbindungselemente federnd ausgelegt. Der Aufbau ist so zur zu messenden Oberfläche montiert, dass eine Stirnfläche des ersten Schaltungsträgers die Oberfläche berührt. Dies bewirkt, dass die Wärme von der zu messenden Oberfläche zum Temperatursensor fließen kann.

In einer besonders bevorzugten Ausführungsform ist die Stirnseite des Schaltungsträgers, die die zu messende Oberfläche berührt, metallisiert.

In einer bevorzugten Ausführungsform ist die Metallisierung der Stirnseite mit einer Metallisierung auf der Oberseite und/oder Unterseite des Schaltungsträgers verbunden. Diese Metallisierung ist wiederum bis in unmittelbarer Nähe zum Temperatursensor ausgeführt oder berührt oder umschließt diesen.

Die Stirnseite des Schaltungsträgers ist bevorzugt mit einer glatten und zumindest an den Rändern abgerundeten Oberfläche ausgeführt. Dadurch ermöglicht sie es, dass die Sensoranordnung entlang der zu messenden Oberfläche gleitend verschoben bzw. gedreht werden kann, was insbesondere beim Ein- oder Ausbau der Sensoranordnung von Vorteil ist, z.B. wenn die Sensoranordnung mittels eines Bajonettverschlusses befestigt wird.

Die Verbindungselemente zwischen den Schaltungsträgern sind bevorzugt metallische Federn, insbesondere Stahl- oder Bronzefedern, die für einen sicheren Andruck des ersten Schaltungsträgers an die Oberfläche sorgen.

Die Verbindungselemente weisen bevorzugt eine gut lötbare Oberfläche auf.

Die Schaltungsträger weisen bevorzugt im Bereich der federnden Verbindungselemente Ausnehmungen auf, die die Verbindungselemente zumindest teilweise umfassen. Diese Ausnehmungen sind bevorzugt zumindest teilweise metallisiert.

In einer bevorzugten Weiterbildung sind die Ausnehmungen der Schaltungsträger so konstruiert, dass die Enden der federnden Verbindungselemente am Schaltungsträger anliegen und die Kräfte senkrecht zur zu messenden Oberfläche auf die Anlagefläche wirken.

In einer bevorzugten Weiterbildung sind die Ausnehmungen der Schaltungsträger so konstruiert, dass die Enden der federnden Verbindungselemente am Schaltungsträger einen Spalt zu den senkrechten Wänden der Ausnehmung aufweisen. Dieser Spalt wird bei der Montage, insbesondere mit Lötzinn, gefüllt.

In einer bevorzugten Weiterbildung sind die beiden Schaltungsträger vor der Montage durch Stege aus dem gleichen Material wie die Schaltungsträger starr miteinander verbunden. Diese Stege werden in einem Arbeitsgang nach der Montage der Verbindungselemente getrennt.

In einer weiteren vorteilhaften Weiterbildung befindet sich auf dem zweiten Schaltungsträger in nicht unmittelbarer Nähe der zu messenden Oberfläche ein weiterer Temperatursensor, der näherungsweise die Temperatur des Sensorgehäuses oder des Innenraums ermittelt.

In einer weiteren besonders vorteilhaften Weiterbildung wird der Messwert des Temperatursensors, der sich in unmittelbarer Nähe der zu messenden Oberfläche befindet und dessen Messwert der Temperatur der zu messenden Oberfläche entspricht, mit dem Messwert des zweiten Temperatursensors korrigiert. Dadurch kann der endliche Wärmeleitwert des Schaltungsträgers und der Verbindungselemente ausgeglichen werden.

In einer weiteren bevorzugten Ausführungsform sind auf einem der Schaltungsträger weitere Sensoren, insbesondere Temperatursensoren, Feuchtesensoren oder Lichtsensoren, angebracht. Der Schaltungsträger ist in diesem Fall bevorzugt im Innenraum eines Kraftfahrzeugs angebracht und dient zur Messung der Temperatur der Frontscheibe. Hierzu kann sie bevorzugt in einen Rückspiegelfuß als Gehäuse integriert werden. Durch eine gleichzeitige Messung der Temperatur der Scheibenoberfläche, des Innenraumes sowie der Luftfeuchte mit den entsprechenden Sensoren kann die Sensoranordnung beispielsweise zur Messung des Scheibenbeschlags eingesetzt werden.

Weitere Vorteile ergeben sich aus der Beschreibung und den Zeichnungen. Die vorstehend genannten und die noch weiter aufgeführten Merkmale können jeweils einzeln oder in Kombination verwendet werden. Die erwähnten Ausführungsformen sind nicht als abschließende Aufzählung zu verstehen, sondern haben vielmehr beispielhaften Charakter.

Ein Ausführungsbeispiel der Erfindung ist in der schematischen Zeichnung dargestellt und wird nachfolgend anhand der Figuren der Zeichnung näher erläutert. Es zeigt:
- **Figur 1**: eine Aufsicht einer Sensoranordnung;
- **Figur 2**: eine Detailansicht der Sensoranordnung;

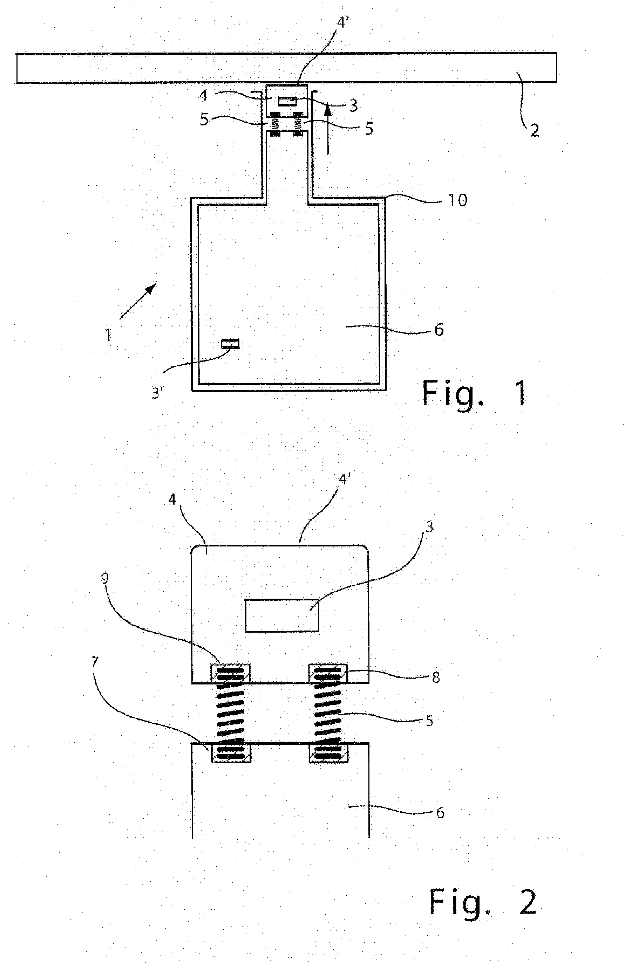

In **Figur 1** ist eine Sensoranordnung **1** zur Temperaturmessung an einer nahezu planen, durch die Frontscheibe **2** eines Kraftfahrzeugs gebildeten Oberfläche gezeigt. Die Sensoranordnung 1 weist einen Temperatursensor **3** auf, der auf einem Schaltungsträger **4** in unmittelbarer Nähe zu einer Stirnseite **4'** des Schaltungsträgers 4 angeordnet ist. Die Stirnseite 4' ist metallisiert und verläuft parallel zur Oberfläche der Frontscheibe 2. Der Schaltungsträger 4 ist durch federnde Elemente **5** und **5'** mit einem zweiten Schaltungsträger **6** verbunden. Die Sensoranordnung 1 ist von einem Gehäuse **10** umgeben, das die Sensoranordnung schützt und eine führende Funktion für den Schaltungsträger 4 aufweist.

Eine detaillierte Ansicht der Verbindung der Schaltungsträger 4 und 6 ist in **Figur 2** gezeigt. An den jeweils gegenüberliegenden Seiten der Schaltungsträger 4 und 6 sind Ausnehmungen **7** angebracht, die die federnden Elemente 5 aufnehmen. Der Spalt zwischen den federnden Elementen 5 und den Wandungen **8** der Ausnehmungen 7, die die Kraftwirkung der federnden Elemente aufnehmen, ist mit Lötzinn **9** gefüllt, so dass die Kräfte nur senkrecht auf Lötstellen wirken.

Auf den Schaltungsträgeren 4 oder 6 können weitere Sensoren sowie eine Auswerteeinheit angebracht sein. Die weiteren Sensoren können einen Temperatursensor 3' zur Messung der Temperatur des Innenraums sowie einen Luftfeuchtesensor umfassen. Die zwei weiteren Sensoren können zusammen mit dem Temperatursensor zur Messung der Oberflächentemperatur für die Bestimmung der Beschlagsneigung der Frontscheibe eingesetzt werden.

## Patentansprüche

1. Sensoranordnung (1) zur Temperaturmessung einer Oberfläche insbesondere einer Scheibe (2) mit einem auf einem Schaltungsträger (4) angebrachten Temperatursensor (3), der im Bereich einer Stirnseite (4') des Schaltungsträgers (4) in der Nähe zu der zu messenden Oberfläche positioniert ist, und einem weiteren Schaltungsträger (6) wobei die Schaltungsträger (4) und (6) mithilfe von mindestens zwei Verbindungselementen (5), wovon mindestens eines federnd ausgeführt ist, verbunden sind.

2. Sensoranordnung nach Anspruch 1, **dadurch gekennzeichnet, dass** die Sensoranordnung (1) so zur zu messenden Oberfläche positioniert ist, dass der Schaltungsträger (4) mit seiner Stirnseite (4') gegen die Oberfläche (2) federnd gedrückt wird.

3. Sensoranordnung nach einem der vorhergehenden Ansprüche, **dadurch gekennzeichnet, dass** die Stirnseite (4') des Schaltungsträgers glatt ausgeführt ist und zumindest teilweise metallisiert ist.

4. Sensoranordnung nach einem der vorhergehenden Ansprüche, **dadurch gekennzeichnet, dass** die federnden Verbindungselemente (5) metallische Federn sind.

5. Sensoranordnung nach einem der vorhergehenden Ansprüche, **dadurch gekennzeichnet, dass** die Schaltungsträger (4) und (6) Ausnehmungen aufweisen, die die Verbindungselemente zumindest teilweise umfassen.
